# DEMANDE DE BREVET EUROPEEN

(11) **EP 3 862 627 A1**
(43) Date de publication de la demande: **11.08.2021**
(21) Numéro de dépôt: 21154579.3
(22) Date de dépôt: 01.02.2021
(51) Int. Cl.: F21V 3/06, F21V 5/04, F21V 9/40

(54) **DISPOSITIF D'ÉCLAIRAGE DIRECTIONNEL**

(30) Priorité: 10.02.2020 FR 2001288
(71) Demandeur: Commissariat à l'énergie atomique et aux énergies alternatives, 75015 Paris (FR)
(72) Inventeur: CONSONNI, Marianne, 38054 GRENOBLE CEDEX 09 (FR); DAAMI, Anis, 38054 GRENOBLE CEDEX 09 (FR); SERMET, Frédéric, 38054 GRENOBLE CEDEX 09 (FR)
(74) Mandataire: Brevalex

(57) **Abrégé**

L'invention concerne un dispositif d'éclairage directionnel (10) et qui comprend :
- une source d'émission lumineuse (30) ;
- un capot (40) en recouvrement de la source d'émission lumineuse (30), et pourvu d'une paroi interne (41) et d'une paroi externe (42) qui délimitent un espace inter paroi (44), et rempli par un fluide, le capot (40) comprenant des zones de transmission (45), formées chacune d'une zone interne (45a) et d'une zone externe (45b), en regard l'une de l'autre, et au niveau desquelles un champ électrique est imposé au fluide au moyen d'une première électrode (46a) et d'une deuxième électrode (46b), le fluide étant adapté pour, sous l'effet d'un champ électrique ressenti au niveau d'une zone de transmission donnée, former avec cette dernière une fenêtre transparente au rayonnement lumineux, et être soit opaque soit réfléchissant et/ou diffusant audit rayonnement dans le reste du volume inter paroi (43).

## Description

### DOMAINE TECHNIQUE

La présente invention se rapporte au domaine des dispositifs d'éclairage et plus particulièrement des dispositifs d'éclairage directionnels. A cet égard, l'invention concerne un dispositif d'éclairage compact et susceptible de fonctionner avec une unique source de rayonnement lumineux.

### ÉTAT DE LA TECHNIQUE ANTÉRIEURE

Les dispositifs d'éclairage directionnels sont aujourd'hui bien connus de l'homme du métier. Dans leur principe de fonctionnement, ces dispositifs permettent de modifier de manière dynamique la direction d'émission lumineuse, et présentent, par voie de conséquence, un intérêt croissant pour leur mise en œuvre dans de nombreux domaines. Parmi ces derniers, on peut citer les domaines tels que l'éclairage de scène, de théâtre, de monuments, mais également considérer des applications relatives à l'éclairage domestique, l'éclairage public ou encore d'autres applications plus spécifiques telles que l'éclairage de salles d'opération.

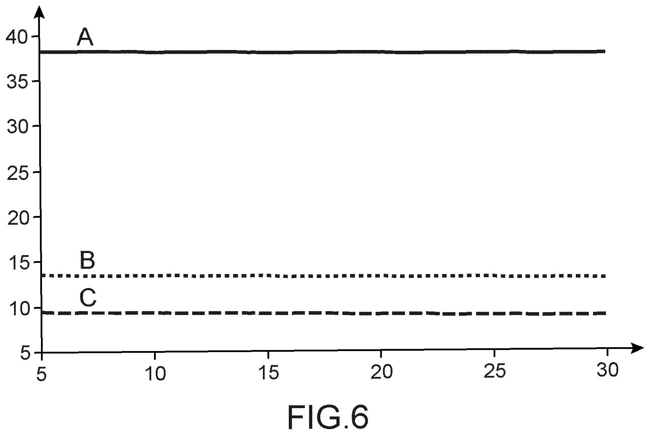

À cet égard, le document [1] cité à la fin de la description divulgue un dispositif d'éclairage directionnel. Ce dispositif comprend notamment une pluralité de sources lumineuses agencées sur une surface concave (figure 6 du document [1]), ainsi qu'un capot en recouvrement de ladite pluralité de sources lumineuses (figure 8 du document [1]). Le capot comprend, pour sa part, une pluralité d'ouvertures. En particulier, chacune de ses ouvertures est appariée avec une source lumineuse différente, de sorte que tout rayonnement lumineux susceptible d'être émis par une source lumineuse donnée passe à travers l'ouverture avec laquelle ladite source est appariée.

Ce dispositif permet ainsi d'émettre un rayonnement lumineux dans une ou plusieurs directions définies par les paires source lumineuse - ouverture.

Toutefois, ce dispositif n'est pas satisfaisant.

En effet, la mise en œuvre d'une pluralité de sources lumineuses, et de l'électronique de puissance associée à chacune d'entre elles, rend le dispositif complexe d'utilisation et de contrôle. Par ailleurs, l'électronique de puissance, connue pour être sensible, nuit à la fiabilité du dispositif d'éclairage directionnel.

En outre, l'adressage individuel de chacune des sources lumineuses requiert la mise en œuvre d'une carte de contrôle relativement complexe et dont le coût peut être important.

De manière alternative, le document [2] cité à la fin de la description divulgue un dispositif d'éclairage directionnel dont l'ajustement est exécuté par des moyens mécaniques.

En particulier, ce dispositif comprend au moins deux plateaux sur lesquels reposent des diodes électroluminescentes pourvues chacune de moyens de collimation.

Les plateaux s'étendent radialement à partir d'un axe de symétrie d'un socle concave, et sont montés pivotant selon un de leurs bords, dit bord périphérique, au niveau du contour dudit socle. L'inclinaison de chacun de plateaux, ajustée au moyen d'une vis, permet alors de régler la direction du rayonnement lumineux émis par les diodes électroluminescentes.

Toutefois, ce dispositif, bien que robuste, reste encombrant et ne répond pas aux exigences en termes de souplesse d'utilisation.

Le document [3] cité à la fin de la description divulgue un autre exemple de dispositif d'éclairage directionnel. Ce dispositif comprend une pluralité de diodes électroluminescentes disposées sur un support, et surmontées chacune d'une optique de mise en forme de faisceau différente d'une diode à l'autre.

La modification dynamique de l'orientation de l'émission lumineuse est commandée par un adressage sélectif des diodes formant le dispositif.

Ce dispositif reste néanmoins relativement encombrant et de contrôle délicat.

Ainsi, un but de la présente invention est de proposer un dispositif d'éclairage directionnel pour lequel le contrôle et/ou l'ajustement de la direction d'émission du rayonnement lumineux est plus simple à mettre en œuvre au regard des dispositifs connus de l'état de la technique.

Un autre but de la présente invention est de proposer un dispositif d'éclairage directionnel qui présente une robustesse améliorée au regard des dispositifs connus de l'état de la technique.

### EXPOSÉ DE L'INVENTION

Les buts de l'invention sont, au moins en partie, atteints par un dispositif d'éclairage destiné à éclairer de manière directionnelle et qui comprend :
- une source d'émission lumineuse disposée sur une surface support ;
- un capot à double paroi disposé en recouvrement de la source d'émission lumineuse, et pourvu d'une paroi interne et d'une paroi externe qui délimitent un espace, dit espace inter paroi, et entièrement rempli par un fluide fonctionnel, le capot comprenant en outre des zones de transmission, formées chacune d'une zone interne et d'une zone externe, respectivement, de la paroi interne et de la paroi externe, en regard l'une de l'autre, et au niveau desquelles un champ électrique est susceptible d'être imposé au fluide fonctionnel au moyen d'une première électrode et d'une deuxième électrode, le fluide fonctionnel étant adapté pour, sous l'effet d'un champ électrique ressenti au niveau d'une zone de transmission donnée, former avec cette dernière une fenêtre transparente au rayonnement lumineux susceptible d'être émis par la source d'émission lumineuse, et être soit opaque soit réfléchissant et/ou diffusant audit rayonnement dans le reste du volume inter paroi, de sorte que ledit rayonnement soit préférentiellement transmis par le dispositif d'éclairage à travers ladite zone de transmission donnée.

Selon un mode de mise en œuvre, le capot présente une forme de dôme.

Selon un mode de mise en œuvre, l'une et/ou l'autre de la zone interne et de la zone externe de chacune des zones de transmission présente une courbure ajustée de sorte chaque zone de transmission forme, avec le liquide fonctionnel soumis à un champ électrique au niveau de ladite zone, une lentille de collimation au foyer de laquelle est disposée la source d'émission lumineuse.

Selon un mode de mise en œuvre, la paroi interne comprend une face interne en regard de la source d'émission lumineuse et recouverte, à l'exception des zones de transmission, d'une couche de matériau réfléchissant.

La couche de matériau réfléchissant peut notamment comprendre une peinture blanche, par exemple un fluoropolymère du type Spectralon® fourni par la société Labsphere.

Selon un mode de mise en œuvre, la surface support est réfléchissante.

Selon un mode de mise en œuvre, le fluide fonctionnel est bi-phasique qui comprend une phase d'un premier fluide, dite phase ambiante, et une bulle d'un deuxième fluide non miscible avec le premier fluide, le premier fluide étant soit opaque soit réfléchissant et/ou diffusant au rayonnement lumineux susceptible d'être émis par la source de rayonnement lumineux, tandis que le deuxième fluide est transparent audit rayonnement, la bulle étant d'un volume sensiblement égal au volume de chaque zone de transmission, et le fluide bi-phasique étant configuré pour que l'application d'un champ électrique au niveau de l'une ou l'autre de deux zones de transmission dites, respectivement, première zone de transmission et deuxième zone de transmission dans laquelle réside la bulle, génère par force électrostatique un déplacement de la bulle de la deuxième zone de transmission vers la première zone de transmission.

Selon un mode de mise en œuvre, la première électrode et la deuxième électrode sont disposées de manière à pouvoir appliquer un champ électrique de symétrie radiale, de sorte que ledit champ, lorsqu'il est appliqué à la phase ambiante résidant dans la première zone de transmission repousse ladite phase de manière à permettre l'écoulement de la bulle dans ladite première zone de transmission.

Selon un mode de mise en œuvre, l'une parmi la première électrode et la deuxième électrode est disposée pour imposer un premier potentiel électrique au centre de l'une parmi la zone interne et la zone externe, tandis que l'autre électrode est formée pour imposer un deuxième potentiel électrique sur un contour de l'autre parmi la zone interne et la zone externe.

Selon un mode de mise en œuvre, les surfaces de la paroi interne et de la paroi externe en regard l'une de l'autre, présentent une première énergie de surface au niveau des zones de transmission et une deuxième énergie de surface, différente de la première énergie de surface, dans les autres zones, la première énergie de surface étant une énergie favorisant le mouillage par la bulle au regard de la phase ambiante, et la deuxième énergie de surface étant une énergie favorisant le mouillage par la phase ambiante au regard de la bulle.

Selon un mode de mise en œuvre, les viscosités respectives de la phase ambiante et de la bulle sont ajustées pour permettre un déplacement de la bulle de fluide d'une zone de transmission à l'autre en une durée inférieure à quelques secondes, par exemple 5 secondes, voire 3 secondes, pour une tension électrique entre 5V et 20V.

Selon un mode de mise en œuvre, le premier fluide est une solution hydrophile ionique, tandis que le deuxième fluide comprend un fluide hydrophobe.

Selon ce mode de mise en œuvre, la bulle peut être non ionique (ou non chargée) et hydrophobe. Un premier fluide hydrophile, et chargé autorise ainsi l'action de forces électrostatique induites par l'action d'un champ électrique. Le premier fluide peut donc être une solution aqueuse. Néanmoins, d'autres liquides hydrophiles, tels que des alcools et notamment l'isopropanol et l'éthanol, peuvent être considérés. La solution ionique (ou chargée) peut être obtenue en chargeant le premier fluide de composés ioniques tels que le nitrate de magnésium et/ou le chlorure de sodium.

Selon un mode de mise en œuvre, le fluide fonctionnel est un fluide bistable qui est soit opaque soit réfléchissant et/ou diffusant au rayonnement susceptible d'être émis par la source d'émission lumineuse, et qui devient transparent audit rayonnement lorsqu'il est soumis à un champ électrique.

Selon un mode de mise en œuvre, le fluide bistable comprend un cristal liquide de type nématique, et plus particulièrement un cristal liquide choisi parmi : MLC-1380000, MLC-1390000, MLC-2139, MLC-2062 ou encore E7.

Selon un mode de mise en œuvre, le capot comprend un matériau polymère, et plus particulièrement au moins un des polymères choisis parmi : PMMA, PET, polycarbonate, silicone.

Selon un mode de mise en œuvre, la source d'émission lumineuse comprend au moins une diode électroluminescente.

### BRÈVE DESCRIPTION DES DESSINS

D'autres caractéristiques et avantages apparaîtront dans la description qui va suivre d'un dispositif d'éclairage directionnel selon l'invention, donnés à titre d'exemples non limitatifs, en référence aux dessins annexés dans lesquels :
La figure 1 est une représentation schématique selon un plan de coupe d'un dispositif selon un premier mode de réalisation de la présente invention, le plan coupe comprenant l'axe de révolution du capot en forme de dôme ;
La figure 2A est une représentation schématique de la première et de la deuxième électrode disposées au niveau d'une zone de transmission du dispositif représenté à la figure 1 et selon un plan coupe comprenant l'axe de révolution de la zone de transmission en forme de disque, les flèches en pointillés représentant les lignes de champ électrique générées par lesdites électrodes ;
La figure 2B est une représentation schématique de la première et de la deuxième électrode disposées au niveau d'une zone de transmission du dispositif représenté à la figure 1, et selon une vue à l'aplomb de la zone externe de ladite zone de transmission, les flèches en pointillés représentant les lignes de champ électrique générées par lesdites électrodes ;
La figure 3A est une représentation schématique de la paroi interne du capot du dispositif représenté à la figure 1, et selon une vue à l'aplomb de la ladite paroi ;
La figure 3B est une représentation schématique de la paroi externe du capot du dispositif représenté à la figure 1, et selon une vue à l'aplomb de la ladite paroi ;
La figure 4 est une représentation schématique d'une zone de transmission selon un plan de coupe selon un deuxième mode de réalisation de la présente invention ;
La figure 5A est une représentation schématique du rayonnement extrait au niveau d'une zone de transmission à l'aplomb de la source de rayonnement lumineux ;
La figure 5B est une représentation schématique du rayonnement extrait au niveau d'une zone de transmission décalée latéralement par rapport à la source de rayonnement lumineux ;
La figure 6 est une représentation graphique de l'extraction lumineuse (en pourcentage selon l'axe vertical) en fonction de la taille de la source de rayonnement lumineux (en mm selon l'axe horizontal), la courbe « A » représente l'extraction pour un capot et une phase ambiante réfléchissants, la courbe « B » représente l'extraction pour un capot réfléchissant et une phase ambiante absorbante, et la courbe « C » représente l'extraction pour un capot et une phase ambiante absorbants.

### EXPOSÉ DÉTAILLÉ DE MODES DE RÉALISATION PARTICULIERS

La présente invention concerne un dispositif d'éclairage directionnel, et notamment pourvu d'une lentille dite intelligente. En particulier, le dispositif selon la présente invention comprend une source d'émission lumineuse en recouvrement de laquelle est disposé un capot à double paroi pourvu d'une paroi interne et d'une paroi externe délimitant un espace inter paroi entièrement rempli par un fluide fonctionnel.

Le capot comprend en outre des zones de transmission, formées chacune d'une zone interne et d'une zone externe, respectivement, de la paroi interne et de la paroi externe, en regard l'une de l'autre, et au niveau desquelles un champ électrique est susceptible d'être imposé au fluide fonctionnel.

Enfin, selon la présente invention, le fluide fonctionnel est adapté pour, sous l'effet d'un champ électrique ressenti au niveau d'une zone de transmission donnée, former avec cette dernière une fenêtre transparente au rayonnement lumineux susceptible d'être émis par la source d'émission lumineuse, et être soit opaque soit réfléchissant et/ou diffusant audit rayonnement dans le reste du volume inter paroi, de sorte que ledit rayonnement soit préférentiellement transmis par le dispositif d'éclairage à travers ladite zone de transmission donnée.

Par « opaque », on entend un fluide qui absorbe au moins 90 %, préférentiellement 100 %, du rayonnement susceptible d'être émis par la source de rayonnement lumineux.

Par « réfléchissant », on entend un fluide qui réfléchit au moins 80 %, préférentiellement 95 %, du rayonnement susceptible d'être émis par la source de rayonnement lumineux.

Par «transparent», on entend un fluide ou un matériau qui laisse passer au moins 50 %, préférentiellement 70 %, voire 80 %, du rayonnement susceptible d'être émis par la source de rayonnement lumineux.

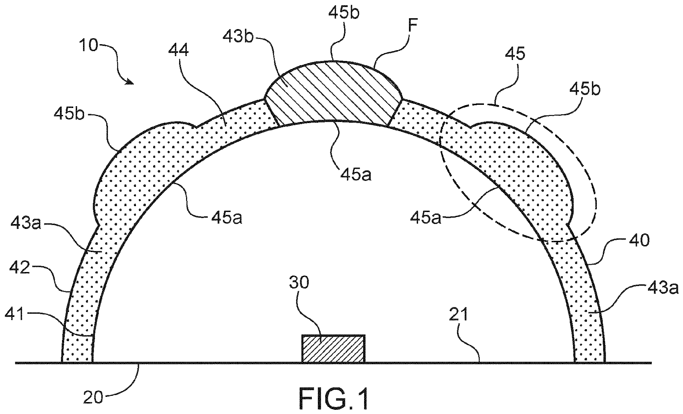

À la figure 1, on peut voir une illustration d'un dispositif d'éclairage directionnel 10 selon un premier mode de réalisation de la présente invention.

Le dispositif d'éclairage directionnel 10 selon la présente invention comprend un support 20 sur une surface duquel, dite surface support 21, repose une source d'émission lumineuse 30.

Le support 20 peut comprendre des moyens d'alimentation destinés à commander l'émission d'un rayonnement lumineux par la source d'émission lumineuse 30. Cette dernière peut à cet égard comprendre au moins une diode électroluminescente (« LED » ou « Light Emitting Diode » selon la terminologie Anglo-Saxonne).

De manière particulièrement avantageuse, la source d'émission lumineuse 30 peut être une source Lambertienne.

La source d'émission lumineuse 30 peut être adaptée pour émettre un rayonnement lumineux dans le domaine visible, et notamment dans une gamme de longueurs d'onde comprises entre 400 nm et 700 nm.

Le dispositif d'éclairage directionnel 10 comprend également un capot 40 à double paroi en recouvrement de la source d'émission lumineuse 30. Par « en recouvrement», on entend un capot dont le bord repose sur la surface support 21 de manière à former avec cette dernière un volume dans lequel est disposée la source d'émission lumineuse 30.

Le capot 40 peut prendre la forme d'un dôme. L'invention n'est toutefois pas limitée à cette seule forme, et il peut être envisagé de conférer à ce dernier une forme rectangulaire ou conique, voire tronconique.

Le capot 40 à double paroi comprend en outre une paroi interne 41 et une paroi externe 42 par exemple liées entre elles au niveau du bord dudit capot 40, et délimitant un espace dit espace inter paroi 44 entièrement rempli d'un fluide fonctionnel.

Les dimensions des parois interne et externe, de l'espace inter paroi 44, et de manière plus générale du capot 40, sont dépendantes de l'application visée et de la taille de la source d'émission lumineuse 30. L'homme du métier pourra donc ajuster ces dernières afin de répondre au mieux aux exigences qui lui sont imposées.

La paroi interne 41 et la paroi externe 42 peuvent comprendre un matériau polymère transparent au rayonnement lumineux susceptible d'être émis par la source de rayonnement lumineux 30.

Le matériau polymère peut par exemple comprendre au moins un des matériaux choisis parmi : PMMA, PET, polycarbonate, silicone.

Le capot 40 comprend également des zones, dites zones de transmission 45, formées d'une zone interne 45a et d'une zone externe 45b, respectivement, de la paroi interne 41 et de la paroi externe 42, et en regard l'une de l'autre.

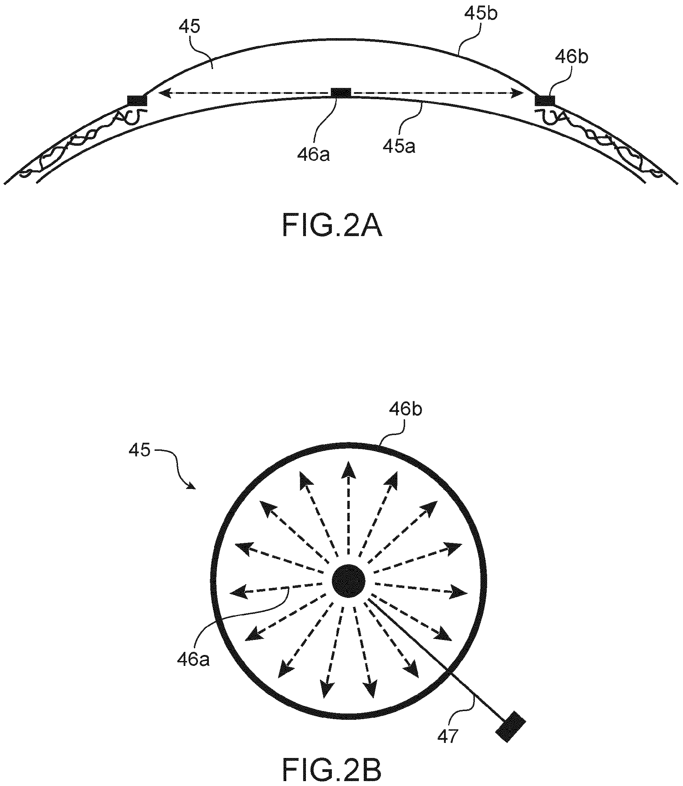

Plus particulièrement, la zone interne 45a et la zone externe 45b de chacune des zones de transmission 45 sont des zones au niveau desquelles un champ électrique est susceptible d'être imposé au fluide fonctionnel disposé entre lesdites zones au moyen d'une première électrode 46a et d'une deuxième électrode 46b (figures 2A et 2B).

Il est entendu que la zone interne 45a et la zone externe 45b sont préférentiellement en forme de disque. Toutefois, d'autres formes, et notamment des formes rectangulaires, carrée, triangulaire, et elliptique, peuvent être considérées dans le cadre de la présente invention.

Aussi, le fluide fonctionnel est adapté pour, sous l'effet dudit champ électrique ressenti au niveau d'une zone de transmission donnée, former avec cette dernière une fenêtre transparente F au rayonnement lumineux susceptible d'être émis par la source d'émission lumineuse, et être soit opaque soit réfléchissant et/ou diffusant audit rayonnement dans le reste du volume inter paroi, de sorte que ledit rayonnement soit préférentiellement transmis par le dispositif d'éclairage à travers ladite zone de transmission donnée.

Selon ce premier mode de réalisation, le fluide fonctionnel est un fluide bi-phasique. En particulier, le fluide bi-phasique comprend une phase, dite phase ambiante 43a, d'un premier fluide et une bulle 43b d'un deuxième fluide non miscible avec le premier fluide. Plus particulièrement, le premier fluide est soit opaque soit réfléchissant et/ou diffusant au rayonnement lumineux susceptible d'être émis par la source de rayonnement lumineux 30, tandis que le deuxième fluide est transparent audit rayonnement. Par ailleurs, la bulle 43b est d'un volume sensiblement égal au volume de chaque zone de transmission.

Enfin, le fluide bi-phasique est configuré pour que l'application d'un champ électrique au niveau de l'une ou l'autre de deux zones de transmission dites, respectivement, première zone de transmission et deuxième zone de transmission dans laquelle réside la bulle, génère un déplacement de la bulle de la deuxième zone de transmission vers la première zone de transmission.

Le déplacement de la bulle peut, par exemple, impliquer une expulsion du premier fluide de la première zone de transmission sous l'effet d'un champ électrique imposé au niveau de ladite zone, et un remplacement dudit fluide par la bulle par écoulement de cette dernière de la deuxième zone de transmission vers la première zone de transmission. Il est entendu, sans qu'il soit nécessaire de le préciser, que l'un et/ou l'autre du premier fluide et du deuxième fluide est incompressible ou faiblement compressible. Une action électrique sur la bulle plutôt que sur la phase ambiante peut, de manière alternative, être considérée.

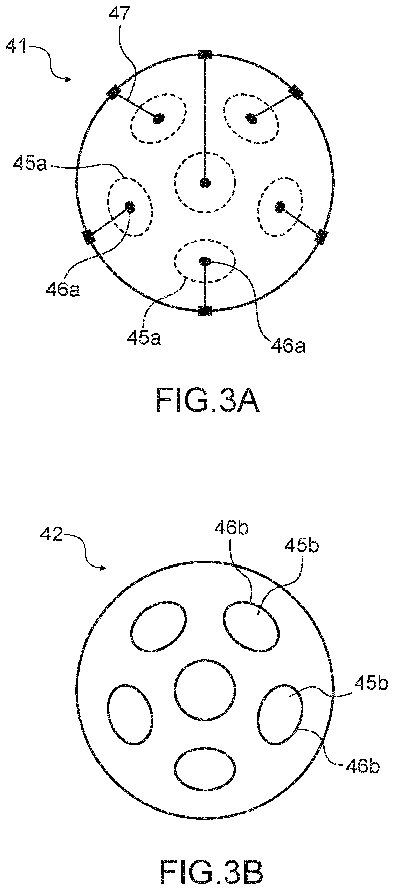

Le champ électrique destiné à expulser le premier fluide peut être de symétrie radiale. Plus particulièrement, pour chaque zone de transmission 45, tel qu'illustré aux figures 2A et 2B, l'une parmi la première électrode 46a et la deuxième électrode 46b est disposée pour imposer un premier potentiel électrique au centre de l'une parmi la zone interne et la zone externe, tandis que l'autre électrode est formée pour imposer un deuxième potentiel électrique sur un contour de l'autre parmi la zone interne et la zone externe. Pour chaque zone de transmission, la première électrode 46a peut par exemple comprendre un contact métallique disposé au centre de la zone interne 45a (figure 2A et 3A), tandis que la deuxième électrode 46b peut comprendre un contact métallique formé sur tout le contour de la zone externe 45b de chaque zone de transmission 45 (figure 2B et 3B). Une piste métallique 47 permettant l'adressage de la première électrode peut s'étendre de manière radiale sur la surface de la zone interne 45a.

Les deuxièmes électrodes 46b peuvent être électriquement connectées ensemble, et par voie de conséquence, imposer le même potentiel à chacun des contours des zones externes. Les premières électrodes 46a sont dans ce cas de figure isolées les unes des autres, et adressée, chacune, de manière individuelle.

Les pistes métalliques et les électrodes peuvent comprendre du cuivre.

Le dispositif d'éclairage directionnel peut être connecté à des moyens de contrôle, par exemple une carte de contrôle électronique, permettant d'adresser chacune des électrodes.

Selon une première variante de ce premier mode de réalisation, le premier fluide susceptible d'être expulsé d'une zone de transmission 45 sous l'effet d'un champ électrique comprend par exemple un fluide conducteur, tandis que le deuxième fluide peut être non conducteur.

Le premier fluide peut comprendre un fluide aqueux et/ou hydrophile ionique, tandis que le deuxième fluide peut être un fluide organique, par exemple une huile et plus particulièrement un silicone, et plus généralement un hydrocarbure.

La bulle (le deuxième fluide) peut être non ionique (ou non chargée) et hydrophobe. Un premier fluide hydrophile, et chargé autorise ainsi l'action de forces électrostatiques induites par l'action d'un champ électrique. Le premier fluide peut donc être une solution aqueuse. Néanmoins, d'autres liquides hydrophiles, tels que des alcools et notamment l'isopropanol et l'éthanol, peuvent être considérés. La solution ionique (ou chargée) peut être obtenue en chargeant le premier fluide de composés ioniques tels que le nitrate de magnésium et/ou le chlorure de sodium.

De manière avantageuse, le premier fluide peut comprendre des particules par exemple blanches (TiO₂ ou ZnO) jouant le rôle de particules réfléchissantes. Le deuxième fluide peut également comprendre des particules, et notamment des nanoparticules (TiO₂, ZrO₂, ZnS, PbS...) destinées à d'augmenter l'indice effectif dudit fluide. Ce dernier aspect, tel que décrit dans la suite de l'énoncé, sera particulièrement avantageux si la zone de transmission doit former avec la bulle une lentille de collimation.

Selon une deuxième variante de ce premier mode de réalisation, le premier fluide et le deuxième fluide sont tous deux non conducteurs, et le premier fluide présente une polarisabilité sensiblement supérieure à celle du deuxième fluide.

La première et la deuxième variante mettent en œuvre un effet, respectivement, d'électro mouillage et de diélectrophorèse décrits en page 11 et 12 du document [4] cité à la fin de la description.

De manière avantageuse, et dans le cadre du premier mode de réalisation, les surfaces de la paroi interne 41 et de la paroi externe 42 en regard l'une de l'autre, présentent une première énergie de surface au niveau des zones de transmission 45 et une deuxième énergie de surface, différente de la première énergie de surface, dans les autres zones. Plus particulièrement, la première énergie de surface est une énergie favorisant le mouillage par la bulle au regard de la phase ambiante, et la deuxième énergie de surface est une énergie favorisant le mouillage par la phase ambiante au regard de la bulle. Le choix des revêtements permettant d'ajuster les énergies de surface est à la portée de l'homme du métier et n'est donc pas décrit dans la présente demande. Il est cependant possible d'utiliser du FDTS (perfluorodecyltrichlorosilane) et du SiOC, tous deux les deux des composés hydrophobes.

Toujours de manière avantageuse, les viscosités respectives de la phase ambiante et de la bulle sont ajustées pour permettre un déplacement de la bulle de fluide d'une zone de transmission à l'autre en une durée inférieure à quelques secondes, par exemple 5 secondes, voire 3 secondes, pour une tension électrique entre 5V et 20V.

L'invention concerne également un deuxième mode de réalisation qui diffère du premier mode de réalisation en ce que le fluide fonctionnel est un fluide bistable, par exemple un cristal liquide, qui est soit opaque soit réfléchissant et/ou diffusant au rayonnement susceptible d'être émis par la source d'émission lumineuse, et qui devient transparent audit rayonnement lorsqu'il est soumis à un champ électrique.

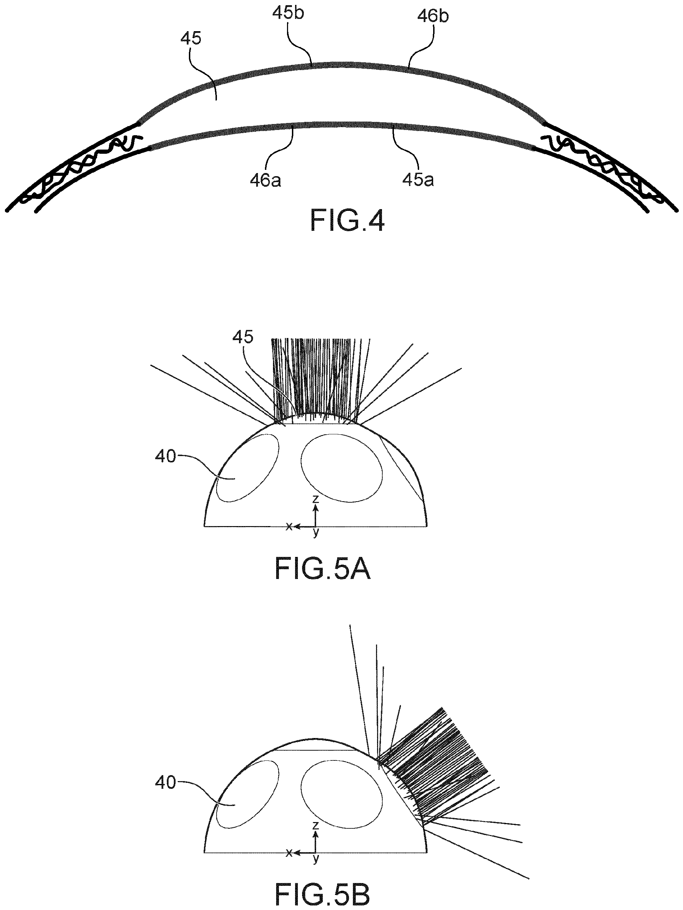

Le cristal liquide est configuré pour être transparent lorsqu'un champ électrique le polarisant lui est appliqué et rester opaque dans le cas contraire (figure 4).

A cet égard, le dispositif comprend, au niveau de chacune des zones de transmission, deux polariseurs optiquement croisés et en recouvrement, respectivement, d'une zone interne et d'une zone externe.

La première électrode 46a et la deuxième électrode 46b de chacune des zones de transmission sont, quant à elles, formées, selon ce deuxième mode de réalisation, chacune en recouvrement d'un polariseur. Ces polariseurs, lorsqu'ils imposent un champ électrique dans une zone de transmission donnée, modifient l'orientation du cristal liquide remplissant ladite zone de transmission, et rendent ledit cristal transparent.

Le cristal liquide peut comprendre au moins un des composés suivants choisis parmi les cristaux liquides de type nématique : MLC-1380000, MLC-1390000, MLC-2139, MLC-2062 ou encore E7.

Les électrodes d'une zone de transmission donnée sont notamment chacune en recouvrement complet, respectivement, de la zone externe et de la zone interne. A cet égard, les électrodes peuvent comprendre un oxyde transparent conducteur, par exemple de l'oxyde de titane et d'indium (« ITO » ou « Indium Titane Oxid » selon la terminologie Anglo-Saxonne).

La mise en œuvre d'un cristal liquide permet de réaliser un passage d'un état non transparent (« opaque » ou « réfléchissant ») à un état transparent en un lapse de temps relativement court et notamment inférieur à 20 millisecondes.

Quel que soit le mode de réalisation envisagé, l'une et/ou l'autre de la zone interne et de la zone externe de chacune des zones de transmission présente une courbure ajustée de sorte que chaque zone de transmission forme, avec le liquide fonctionnel soumis à un champ électrique au niveau de ladite zone, une lentille de collimation au foyer de laquelle est disposée la source d'émission lumineuse.

Les inventeurs ont simulé l'efficacité d'une telle lentille sur la capacité d'extraction du rayonnement lumineux susceptible d'être émis par la source d'émission lumineuse. Un capot considéré est rigide, hémisphérique, de diamètre interne de 12 cm. Ce dernier comprend également 6 zones de transmission distinctes de diamètre 4.8 cm et de rayon de courbure 5 cm. Le capot repose par ailleurs sur une surface support diffusante et réfléchissante sur laquelle est disposée une source de rayonnement lumineux.

Le fluide fonctionnel considéré est bi-phasique et comprend une bulle faite d'un deuxième liquide d'indice de réfraction n=1,64. Les figures 5A et 5B représentent le rayonnement émis par la source d'émission lumineuse et effectivement extrait au niveau de deux zones de transmission différentes.

Les tracés ainsi obtenus par simulation (notamment avec le logiciel « Light Tools ») de l'extraction de lumière effectivement obtenue au niveau de la zone transparente dans laquelle loge la bulle sont illustrés aux figures 5A et 5B. La dispersion angulaire du rayonnement extrait est très étroite et notamment inférieure à 10°.

Toujours de manière avantageuse, la paroi interne comprend une face interne en regard de la source d'émission lumineuse et recouverte, à l'exception des zones de transmission, d'une couche de matériau réfléchissant. La couche de matériau réfléchissant peut notamment comprendre une peinture blanche, par exemple un fluoropolymère du type Spectralon® fourni par la société Labsphere.

La surface support peut également être réfléchissante.

A cet égard, la figure 6 est une représentation graphique de l'extraction lumineuse (en pourcentage selon l'axe vertical) en fonction de la taille de la source d'émission lumineuse (en mm selon l'axe horizontal). Plus particulièrement, la courbe «A» représente l'extraction pour un capot et une phase ambiante réfléchissants, la courbe « B » représente l'extraction pour un capot réfléchissant et une phase ambiante absorbante, et la courbe « C » représente l'extraction pour un capot et une phase ambiante absorbants.

La lecture de ce graphique démontre que la taille de la source d'émission lumineuse n'a que peu d'effet sur l'extraction lumineuse, tandis que le caractère réfléchissant tant du capot que de la phase ambiante permet d'améliorer l'extraction.

Le dispositif d'éclairage directionnel proposé dans la présente invention est parfaitement homothétique, et permet donc de considérer des dispositifs de toutes tailles dans les limites de validité de l'optique géométrique.

Le dispositif peut par ailleurs être considéré dans les domaines de l'éclairage mais peut également être mis en œuvre dans les écrans de grande dimension. Ce dernier peut également être intégré pour les écrans 3D.

### RÉFÉRENCES

[1] US 10015868B2 ;
[2] US 2005/0265024 ;
[3] US 2009/0323330;
[4] FR 2884437.

## Revendications

1. Dispositif d'éclairage directionnel (10) et qui comprend :
- une source d'émission lumineuse (30) disposée sur une surface support (21) ;
- un capot (40) à double paroi disposé en recouvrement de la source d'émission lumineuse (30), et pourvu d'une paroi interne (41) et d'une paroi externe (42) qui délimitent un espace, dit espace inter paroi (44), et entièrement rempli par un fluide fonctionnel, le capot (40) comprenant en outre des zones de transmission (45), formées chacune d'une zone interne (45a) et d'une zone externe (45b), respectivement, de la paroi interne (41) et de la paroi externe (42), en regard l'une de l'autre, et au niveau desquelles un champ électrique est susceptible d'être imposé au fluide fonctionnel au moyen d'une première électrode (46a) et d'une deuxième électrode (46b), le fluide fonctionnel étant adapté pour, sous l'effet d'un champ électrique ressenti au niveau d'une zone de transmission donnée, former avec cette dernière une fenêtre transparente au rayonnement lumineux susceptible d'être émis par la source d'émission lumineuse (30), et être soit opaque soit réfléchissant et/ou diffusant audit rayonnement dans le reste du volume inter paroi (43), de sorte que ledit rayonnement soit préférentiellement transmis par le dispositif d'éclairage à travers ladite zone de transmission donnée.

2. Dispositif d'éclairage selon la revendication 1, dans lequel le capot (40) présente une forme de dôme.

3. Dispositif d'éclairage selon la revendication 2, dans lequel l'une et/ou l'autre de la zone interne (45a) et de la zone externe (45b) de chacune des zones de transmission (45) présente une courbure ajustée de sorte que chaque zone de transmission forme, avec le liquide fonctionnel soumis à un champ électrique au niveau de ladite zone, une lentille de collimation au foyer de laquelle est disposée la source d'émission lumineuse (30).

4. Dispositif d'éclairage selon la revendication 2 ou 3, dans lequel la paroi interne (41) comprend une face interne en regard de la source d'émission lumineuse (30) et recouverte, à l'exception des zones de transmission, d'une couche de matériau réfléchissant.

5. Dispositif d'éclairage selon l'une des revendications 2 à 4, dans lequel la surface support (21) est réfléchissante.

6. Dispositif d'éclairage selon l'une des revendications 2 à 5, dans lequel le fluide fonctionnel est un fluide bi-phasique qui comprend une phase d'un premier fluide, dite phase ambiante (43a), et une bulle (43b) d'un deuxième fluide non miscible avec le premier fluide, le premier fluide étant soit opaque soit réfléchissant et/ou diffusant au rayonnement lumineux susceptible d'être émis par la source de rayonnement lumineux, tandis que le deuxième fluide est transparent audit rayonnement, la bulle (43b) étant d'un volume sensiblement égal au volume de chaque zone de transmission, et le fluide bi-phasique étant configuré pour que l'application d'un champ électrique au niveau de l'une ou l'autre de deux zones de transmission (45) dites, respectivement, première zone de transmission et deuxième zone de transmission dans laquelle réside la bulle (43b), génère par force électrostatique un déplacement de la bulle (43b) de la deuxième zone de transmission vers la première zone de transmission.

7. Dispositif d'éclairage selon la revendication 6, dans lequel la première électrode (46a) et la deuxième électrode (46b) sont disposées de manière à pouvoir appliquer un champ électrique de symétrie radiale, de sorte que ledit champ, lorsqu'il est appliqué à la phase ambiante (43a) résidant dans la première zone de transmission repousse ladite phase de manière à permettre l'écoulement de la bulle (43b) dans ladite première zone de transmission.

8. Dispositif d'éclairage selon la revendication 7, dans lequel l'une parmi la première électrode (46a) et la deuxième électrode (46b) est disposée pour imposer un premier potentiel électrique au centre de l'une parmi la zone interne (45a) et la zone externe (45b), tandis que l'autre électrode est formée pour imposer un deuxième potentiel électrique sur un contour de l'autre parmi la zone interne (45a) et la zone externe (45b).

9. Dispositif d'éclairage selon l'une des revendications 6 à 8, dans lequel les surfaces de la paroi interne (41) et de la paroi externe (42) en regard l'une de l'autre, présentent une première énergie de surface au niveau des zones de transmission (45) et une deuxième énergie de surface, différente de la première énergie de surface, dans les autres zones, la première énergie de surface étant une énergie favorisant le mouillage par la bulle (43b) au regard de la phase ambiante (43a), et la deuxième énergie de surface étant une énergie favorisant le mouillage par la phase ambiante (43a) au regard de la bulle (43b).

10. Dispositif d'éclairage selon l'une des revendications 6 à 9, dans lequel les viscosités respectives de la phase ambiante (43a) et de la bulle (43b) sont ajustées pour permettre un déplacement de la bulle (43b) de fluide d'une zone de transmission à l'autre en une durée inférieure à 5 secondes, voire 3 secondes pour une tension comprise entre 5V et 20V.

11. Dispositif d'éclairage selon l'une des revendications 6 à 10, dans lequel le premier fluide est une solution hydrophile ionique, tandis que le deuxième fluide comprend un fluide hydrophobe.

12. Dispositif d'éclairage selon l'une des revendications 2 à 5, dans lequel le fluide fonctionnel est un fluide bistable qui est soit opaque soit réfléchissant et/ou diffusant au rayonnement susceptible d'être émis par la source d'émission lumineuse (30), et qui devient transparent audit rayonnement lorsqu'il est soumis à un champ électrique.

13. Dispositif d'éclairage selon la revendication 12, dans lequel le fluide bistable comprend un cristal liquide de type nématique, et plus particulièrement un cristal liquide choisi parmi : MLC-1380000, MLC-1390000, MLC-2139, MLC-2062 ou encore E7.

14. Dispositif d'éclairage selon l'une des revendications 1 à 13, dans lequel le capot (40) comprend un matériau polymère, et plus particulièrement au moins un des polymères choisis parmi : PMMA, PET, polycarbonate, silicone.

15. Dispositif d'éclairage selon l'une des revendications 1 à 14, dans lequel la source d'émission lumineuse (30) comprend au moins une diode électroluminescente.
